# EUROPÄISCHE PATENTANMELDUNG

(11) **EP 1 903 685 A1**
(43) Veröffentlichungstag der Anmeldung: **26.03.2008**
(21) Anmeldenummer: 07018252.2
(22) Anmeldetag: 18.09.2007
(51) Int. Cl.: H04B 3/54

(54) **Konferenztischsystem**

(30) Priorität: 21.09.2006 DE 102006044464
(71) Anmelder: VS Vereinigte Spezialmöbelfabriken GmbH & Co. KG, 97941 Tauberbischofsheim (DE)
(72) Erfinder: Weber, Reinhard, D-32425 Minden (DE); Begemann, Heinz, D-97941 Tauberbischofsheim (DE); Lippert, Gerhard, D-97953 Königheim (DE); Erbacher, Marco, D-97941 Tauberbischofsheim (DE)
(74) Vertreter: Söltenfuss, Dirk Christian

(57) **Zusammenfassung**

Ein flexibles und einfach zu verkabelndes Konferenztischsystem enthält einen Steuertisch (10) mit einer Anschlussvorrichtung (14) mit wenigstens einem Anschluss zur Verbindung mit wenigstens einer externen Vorrichtung (16); einer Verteilervorrichtung (18) mit wenigstens einem ersten Anschlussmodul (19), das für jeden Anschluss der Anschlussvorrichtung (14) einen ersten Anschluss aufweist; und einer Steuervorrichtung (20) zum Steuern der Verbindungen der mehreren ersten Anschlüsse der Verteilervorrichtung (18) mit dem jeweiligen Anschluss der Anschlussvorrichtung (14); wenigstens einen weiteren Tisch (12), der wenigstens ein zweites Anschlussmodul (22) mit wenigstens einem zweiten Anschluss entsprechend den ersten Anschlüssen des wenigstens einen ersten Anschlussmoduls (19) des Steuertisches (10) aufweist, sodass ein Benutzer des weiteren Tisches (12) auf die an den Steuertisch (10) angeschlossenen externen Vorrichtungen (16) zugreifen kann; und wenigstens eine Verbindungsvorrichtung (24) zum Verbinden eines zweiten Anschlussmoduls (22) eines weiteren Tisches (12) mit einem ersten Anschlussmodul (19) des Steuertisches (10) derart, dass die zweiten Anschlüsse des zweiten Anschlussmoduls (22) mit den jeweiligen ersten Anschlüssen des ersten Anschlussmoduls (19) verbunden sind, wobei die wenigstens eine Verbindungsvorrichtung (24) mit dem ersten Anschlussmodul (19) und/oder dem zweiten Anschlussmodul (22) lösbar verbindbar ist.

## Beschreibung

Die vorliegende Erfindung betrifft ein Konferenztischsystem, und insbesondere ein Konferenztischsystem, das bei Bedarf einfach und flexibel aufgebaut werden kann.

An Konferenztische werden zunehmend höhere technische Anforderungen gestellt. Es ist erwünscht, dass die Konferenztische den Benutzern verschiedene Anschlussmöglichkeiten für technische Geräte (z.B. Laptops, Telefone) bereitstellen und auch einen Zugang zu gemeinsamen Vorrichtungen (z.B. Beamer, Computernetzwerk) ermöglichen. So soll es für einen Konferenzteilnehmer beispielsweise möglich sein, über sein angeschlossenes Laptop einen Beamer für eine Präsentation zu steuern oder Daten aus dem Internet oder einem lokalen Computernetzwerk abzurufen.

Für diese technische Funktionalität der Konferenztische ist eine Verkabelung mit einer Vielzahl von elektrischen Leitungen und Anschlüssen erforderlich. Bei fest installierten Konferenzräumen stellt dies grundsätzlich kein Problem dar. Andererseits wird aber vermehrt eine hohe Flexibilität der Arbeitsplätze derart gefordert, dass zum Beispiel Arbeitstische zum Zwecke einer Konferenz variabel zusammengestellt werden können. Die dann notwendige variable Verkabelung der Konferenztische kann von einem Laien häufig nicht mehr durchgeführt werden, und es muss hierfür regelmäßig ein Kommunikations- oder Computertechniker hinzugezogen werden.

Es besteht deshalb Bedarf an einem Konferenztischsystem, das eine einfache Verkabelung der einzelnen Konferenztische erlaubt, die auch von einem Laien problemlos durchgeführt werden kann.

Zu diesem Zweck offenbart die DE 10 2005 003 564 A1 einen Konferenztisch, der an seinen beiden Seiten jeweils mit einem Tischverbindungsmodul versehen ist, das über eine lösbare Kabelverbindung mit dem Tischverbindungsmodul eines benachbarten Konferenztisches verbunden werden kann, sodass eine serielle Busleitung für verschiedene Signalarten gebildet wird. Die Tischverbindungsmodule sind jeweils mit einer im Konferenztisch integrierten Steuervorrichtung verbunden, über welche die Datenübertragung zu einem ebenfalls am Konferenztisch installierten Steckfeld gesteuert wird. Aufgrund der seriellen Datenübertragung zwischen den mehreren angeschlossenen Konferenztischen ist eine sehr einfache Verkabelung der Konferenztische mit wenig Kabelmaterial möglich, allerdings benötigt jeder Konferenztisch eine eigene Steuervorrichtung zur Steuerung und Koordinierung der Datenkommunikation. Aufgrund der fest installierten Tischverbindungsmodule ist bei den vorgesehenen kurzen Verbindungskabeln auch nur eine beschränkte Variabilität bei der Anordnung der Konferenztische im Raum gegeben. Ein ähnliches Netzwerk für mehrere Arbeitstische, mit dem analoge Signale übertragen werden können, ist in der DE 20 2005 013 570 U1 beschrieben. Eine weitere Konferenztischanlage mit mehreren seriell verknüpften Arbeitsplätzen und einer zentralen Verteilereinheit zeigt die DE 10 2004 052 215 A1.

Ferner ist zum Beispiel aus der JP-A-2005-137544 eine Gruppe aus mehreren Computerarbeitsplätzen bekannt, die jeweils über eine zentrale Schaltvorrichtung mit einem Netzanschluss verbunden sind, wobei üblicherweise alle Benutzer bzw. Computerarbeitsplätze gleichzeitig auf das Netz zugreifen können.

Der vorliegenden Erfindung liegt die Aufgabe zugrunde, ein Konferenztischsystem bereitzustellen, das ein hohes Maß an Flexibilität bei der Anordnung der Konferenztische ermöglicht und dennoch sehr einfach aufzubauen bzw. zu verkabeln ist.

Diese Aufgabe wird gelöst durch ein Konferenztischsystem mit den Merkmalen des Anspruchs 1. Vorteilhafte Ausgestaltungen und Weiterbildungen der Erfindung sind Gegenstand der abhängigen Ansprüche.

Das Konferenztischsystem enthält einen zentralen Steuertisch, wenigstens einen weiteren Tisch (Konferenztisch) und wenigstens eine Verbindungsvorrichtung zwischen dem Steuertisch und dem weiteren Tisch. Der Steuertisch weist eine Anschlussvorrichtung mit wenigstens einem Anschluss zur Verbindung mit wenigstens einer externen Vorrichtung (z.B. Beamer, Computernetzwerk, Telefonnetz), eine Verteilervorrichtung mit wenigstens einem ersten Anschlussmodul, das für jeden Anschluss der Anschlussvorrichtung einen ersten Anschluss aufweist, und eine Steuervorrichtung zum Steuern der Verbindungen der mehreren ersten Anschlüsse der Verteilervorrichtung mit dem jeweiligen Anschluss der Anschlussvorrichtung auf. Die weiteren Tische weisen wenigstens ein zweites Anschlussmodul mit wenigstens einem zweiten Anschluss entsprechend den ersten Anschlüssen des wenigstens einen ersten Anschlussmoduls des Steuertisches auf, sodass ein Benutzer eines weiteren Tisches auf die an den Steuertisch angeschlossenen externen Vorrichtungen zugreifen kann. Die Verbindungsvorrichtungen sind zum Verbinden eines zweiten Anschlussmoduls eines weiteren Tisches mit einem ersten Anschlussmodul des Steuertisches derart, dass die zweiten Anschlüsse des zweiten Anschlussmoduls mit den jeweiligen ersten Anschlüssen des ersten Anschlussmoduls verbunden sind, ausgebildet, wobei die wenigstens eine Verbindungsvorrichtung mit dem ersten Anschlussmodul und/oder dem zweiten Anschlussmodul lösbar verbunden werden kann.

Da ein zentraler Steuertisch mit einer zentralen Steuervorrichtung zum Steuern und Koordinieren der Kommunikation mit den angeschlossenen externen Vorrichtungen vorgesehen ist, ist die Anzahl der erforderlichen Steuervorrichtungen stark reduziert. Die sternförmige Verbindung zwischen den weiteren Tischen und dem einen Steuertisch erlaubt eine wesentlich flexiblere Anordnung der weiteren Tische als im Fall einer seriellen Datenübertragung zwischen den Konferenztischen, wie sie bei den eingangs erwähnten herkömmlichen Konferenztischanlagen verwendet wird. Die (vorkonfektionierten) Verbindungsvorrichtungen zwischen den ersten Anschlussmodulen des Steuertisches und den zweiten Anschlussmodulen der weiteren Tische erlauben eine einfache, auch von einem Laien durchführbare Verkabelung der gewünschten Konferenztische, da die Verkabelung jeweils eine eindeutige Zuordnung der Anschlüsse vorsieht.

Die Anschlüsse der Anschlussvorrichtung, die ersten Anschlüsse der ersten Anschlussmodule und die zweiten Anschlüsse der zweiten Anschlussmodule sind ausgewählt aus Anschlüssen für Audiosignale, Anschlüssen für VGA- und Videosignale, Anschlüssen für Computernetzwerksignale, Anschlüssen für Telefonnetzsignale, usw..

In einer Ausgestaltung der Erfindung weisen die ersten Anschlussmodule der Verteilervorrichtung ferner jeweils einen ersten Anschluss zur Stromversorgung auf, und die zweiten Anschlussmodule der weiteren Tische weisen ferner wenigstens einen zweiten Anschluss zur Stromversorgung auf, der über die jeweilige Verbindungsvorrichtung mit dem ersten Stromversorgungsanschluss des ersten Anschlussmoduls verbunden werden kann. Hierdurch wird dem Benutzer des Konferenztisches auch eine Stromversorgung zum Betrieb seiner elektronischen Geräte bereitgestellt.

In einer weiteren Ausgestaltung der Erfindung sind die Verbindungsvorrichtungen als flexible Kabelstränge ausgebildet, wodurch eine größtmögliche Flexibilität bei der Anordnung der Konferenztische erreicht wird.

In einer noch weiteren Ausgestaltung der Erfindung weist der Steuertisch ferner wenigstens ein Aufbewahrungsfach für eine Verbindungsvorrichtung auf. Alternativ oder zusätzlich weist jeder weitere Tisch ebenfalls wenigstens ein Aufbewahrungsfach für eine Verbindungsvorrichtung auf. Auf diese Weise können die Verbindungsvorrichtung platzsparend entweder im Steuertisch oder an den Konferenztischen aufbewahrt werden und stehen daher bei Bedarf sofort zur Verfügung.

Ferner besteht die Möglichkeit, dass auch der Steuertisch ferner wenigstens ein zweites Anschlussmodul aufweist, das wenigstens einen zweiten Anschluss entsprechend den ersten Anschlüssen des wenigstens einen ersten Anschlussmoduls besitzt und über eine Verbindungsvorrichtung mit einem ersten Anschlussmodul verbunden ist, sodass ein Benutzer des Steuertisches auf die an den Steuertisch angeschlossenen externen Vorrichtungen zugreifen kann. Auf diese Weise kann auch der zentrale Steuertisch als ein Konferenztisch durch einen Konferenzteilnehmer genutzt werden.

In einer weiteren Ausführungsform weisen die ersten Anschlussmodule der Verteilervorrichtung ferner wenigstens einen ersten Anschluss auf, der über die Verteilervorrichtung mit jeweils wenigstens einem ersten Anschluss der anderen ersten Anschlussmodule verknüpft ist. Bei dieser Gestaltung können die Benutzer der verschiedenen weiteren Tische über die zweiten Anschlussmodule auch miteinander kommunizieren.

In einer bevorzugten Ausführungsform der Erfindung sind die zweiten Anschlussmodule jeweils in die Tischplatte eines weiteren Tisches integriert, und der Anschluss der Verbindungsvorrichtung erfolgt unterhalb der Tischplatte (z.B. in einer Kabelwanne). Dabei sind die zweiten Anschlussmodule vorzugsweise zwischen einer Nichtgebrauchsstellung, in welcher sie die zweiten Anschlüsse verdecken und bündig mit der Tischplatte des weiteren Tisches abschließen, und einer Gebrauchsstellung, in welcher sie die zweiten Anschlüsse einem Benutzer zugänglich machen, verstellbar. Diese Maßnahme trägt den Anforderungen nach einer hohen technischen Funktionalität und gleichzeitig anspruchsvollem Design Rechnung.

In einer weiteren Ausgestaltung der Erfindung sind die ersten Anschlussmodule der Verteilervorrichtung innerhalb des Steuertisches angeordnet, und die Verbindungsvorrichtungen sind in einer beliebigen Richtung bzw. an einer beliebigen Stelle aus dem Steuertisch herausführbar. Hierdurch wird die Flexibilität bei der Anordnung der Konferenztische weiter verbessert.

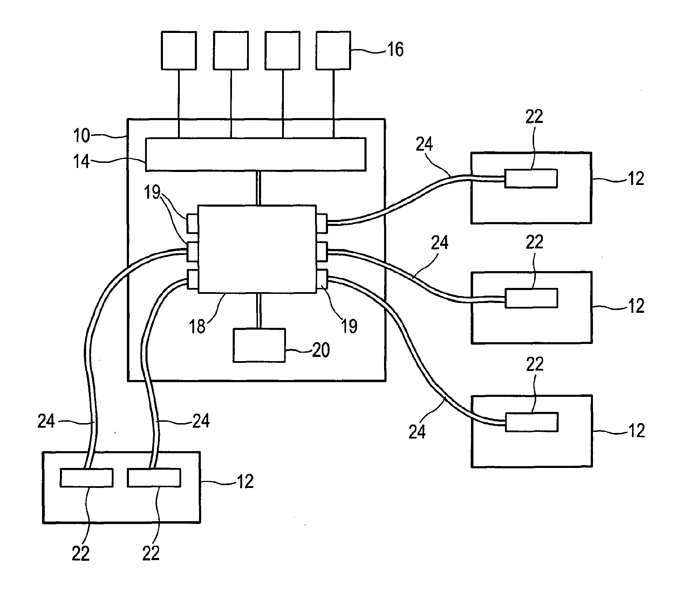

Obige sowie weitere Merkmale und Vorteile der Erfindung werden aus der nachfolgenden Beschreibung eines nicht-einschränkenden Ausführungsbeispiels unter Bezugnahme auf die beiliegenden Zeichnungen besser verständlich. Darin zeigt die einzige Figur ein schematisches Blockschaltbild des Aufbaus eines erfindungsgemäßen Konferenztischsystems.

In der einzigen Figur ist der Aufbau eines Konferenztischsystems nur stark vereinfacht dargestellt. Selbstverständlich ist das Konferenztischsystem auf beliebige Arten, Größen und Anzahlen von Konferenztischen anwendbar.

Das in der Figur veranschaulichte Konferenztischsystem enthält einen (zentralen) Steuertisch 10 und mehrere (sternförmig angeschlossene) weitere Tische (Konferenztische) 12. Die Konferenztische 12 können in beliebiger Anordnung zu einer Konferenz zusammengestellt werden; ihre Anzahl und ihre Anordnung sind lediglich durch die Anzahl der im Steuertisch 10 vorgesehenen Anschlussmodule (später beschrieben) und die Anzahl und die Länge der Verbindungsvorrichtungen (später beschrieben) 24 beschränkt. Sowohl der Steuertisch 10 als auch die Konferenztische 12 sind mobil ausgebildet.

Der Steuertisch 10 enthält in seinem Innern, das zum Beispiel durch eine aufklappbare Tischplatte zugänglich ist, eine Anschlussvorrichtung 14 mit wenigstens einem Anschluss für wenigstens eine externe Vorrichtung 16. Bei den anzuschließenden externen Vorrichtungen 16 handelt es sich zum Beispiel um Audio- und Videogeräte, Präsentationsgeräte wir Beamer und dergleichen, Computernetzwerke, Drucker, Telefonnetze, usw.. Es ist für den Fachmann offensichtlich, dass zum ordnungsgemäßen Anschluss einer externen Vorrichtung 16 teilweise auch mehrere Anschlüsse (zum Beispiel Audio und Video) vorhanden sein müssen.

Entsprechend den möglichen externen Vorrichtungen 16 enthalten die Anschlüsse der Anschlussvorrichtung 14 (wie auch alle weiter unten genannten anderen Anschlüsse) insbesondere Anschlüsse für Audiosignale, Anschlüsse für VGA- und Videosignale, Anschlüsse für Computernetzwerksignale (einschließlich parallele und serielle Schnittstellen, USB-Schnittstellen, LAN-Schnittstellen, PS/2-Schnittstellen, usw.), Anschlüsse für Telefonnetzsignale (einschließlich Telefonanschlüsse und Telefaxanschlüsse, ISDN- und DSL-Verbindungen, usw.) und dergleichen. Der Fachmann auf dem Gebiet der Kommunikationstechnik wird weitere Anschlussarten für bereits existierende oder auch künftige elektronische Geräte erkennen und das hier vorgeschlagene Konferenztischsystem entsprechend ergänzen.

Die Anschlussvorrichtung 14 ist mit einer Verteilervorrichtung 18 im Steuertisch 10 verbunden, die mehrere erste Anschlussmodule 19 aufweist, welche jeweils mehrere erste Anschlüsse besitzen. Die Verteilervorrichtung 18 verknüpft jeden der Anschlüsse der Anschlussvorrichtung 14 mit einem entsprechenden ersten Anschluss aller ersten Anschlussmodule 19. Die Steuerung bzw. Koordinierung dieser Verknüpfungen wird durch eine ebenfalls im Steuertisch 10 angeordnete (zentrale) Steuervorrichtung 20 durchgeführt. Außerhalb des Steuertisches 10 sind damit grundsätzlich keine weiteren Steuervorrichtungen zur Regelung der Kommunikation zwischen den Anschlüssen bzw. mit den externen Vorrichtungen 16 notwendig.

Wie in der Figur dargestellt, ist jeder der weiteren Tische 12 mit wenigstens einem zweiten Anschlussmodul 22 ausgestattet. Diese zweiten Anschlussmodule 22 weisen jeweils zweite Anschlüsse auf, die den ersten Anschlüssen der ersten Anschlussmodule 19 der Verteilervorrichtung 18 entsprechen. Die Verbindung zwischen den zweiten Anschlussmodulen 22 der Konferenztische 12 und den ersten Anschlussmodulen 19 des Steuertisches 10 erfolgt über Verbindungsvorrichtungen 24, die vorzugsweise als vorkonfektionierte, einheitliche, flexible Kabelstränge ausgebildet sind. Die Verbindungsvorrichtungen 24 sind alle zueinander identisch und erlauben jeweils nur eine eindeutige Anschlussmöglichkeit zu einem ersten Anschlussmodul 19 und einem zweiten Anschlussmodul 22. Außerdem sind die Verbindungsvorrichtungen 24 bevorzugt lösbar mit den ersten und den zweiten Anschlussmodulen 19, 22 verbindbar. Jeder Konferenztisch 12 ist über eine eigene Verbindungsvorrichtung 24 mit dem zentralen Steuertisch 10 verbunden.

Den Benutzern der einzelnen Konferenztische 12 wird in diesem Konferenztischsystem ein Zugriff auf die angeschlossenen externen Vorrichtungen 16 ermöglicht, der von der zentralen Steuervorrichtung 20 koordiniert wird. Beispielsweise können die Benutzer bei einer Präsentation mittels Beamer oder Großbildschirm über ihre eigenen Laptops, die sie an die zweiten Anschlussmodule 22 ihrer Tische 12 angeschlossen haben, Einfluss auf die Präsentation nehmen, wobei in diesem Fall der Zugriff üblicherweise nur jeweils einem Benutzer zu einem Zeitpunkt erlaubt wird. Ebenso besteht beispielsweise die Möglichkeit, den Benutzern den Zugriff von ihrem Laptop auf das Internet oder ein lokales Firmennetz zu gewähren.

Die einzelnen Konferenztische 12 müssen nur mit den zweiten Anschlussmodulen 22 versehen sein, eigene Steuervorrichtungen zur Koordination der Kommunikation mit den externen Vorrichtungen 16 sind hier nicht erforderlich, da dies zentral durch die Steuervorrichtung 20 des Steuertisches 10 erfolgt.

Des Weiteren kann auch die Möglichkeit geschaffen werden, dass die Benutzer der Konferenztische direkt miteinander kommunizieren können. Hierzu weisen die ersten Anschlussmodule 19 der Verteilervorrichtung 18 wenigstens einen ersten Anschluss auf, der über die Verteilervorrichtung 18 mit jeweils wenigstens einem ersten Anschluss der anderen ersten Anschlussmodule 19 verknüpft ist. Diese ersten Anschlüsse können entweder zusätzliche erste Anschlüsse oder bereits vorhandene erste Anschlüsse der ersten Anschlussmodule 19 sein. (Gleiches gilt entsprechend auch für die zweiten Anschlussmodule 22 mit entsprechenden zweiten Anschlüssen.)

Zusätzlich zu den Anschlüssen, ersten Anschlüssen und zweiten Anschlüssen für die Datenkommunikation sind die Anschlussvorrichtung 14 und die ersten und die zweiten Anschlussmodule 19, 22 vorzugsweise auch mit Anschlüssen für die Stromversorgung ausgestattet, und die Verbindungsvorrichtungen 24 sind ebenfalls mit entsprechenden Stromversorgungsleitungen ausgestattet. In den zweiten Anschlussmodulen 22 der Konferenztische 12 können dabei auch mehrere Stromversorgungsanschlüsse bereitgestellt werden. Den Benutzern der Konferenztische 12 wird so an den zweiten Anschlussmodulen 22 auch eine Stromversorgung ihrer elektronischen Geräte (z.B. Laptops, Telefone) angeboten, sodass keine separaten, zusätzliche Kabelverbindungen erfordernde Stromversorgungsanschlüsse vorgesehen werden müssen.

Vorteilhafterweise sind die ersten Anschlussmodule 19 der Verteilervorrichtung 18 innerhalb des Steuertisches 10 angeordnet, und die Verbindungsvorrichtungen 24 sind in einer beliebigen Richtung bzw. an einer beliebigen Stelle aus dem Steuertisch 10 herausführbar. Hierzu weist der Steuertisch 10 zum Beispiel breite Durchgangsöffnungen oder -schlitze im oberen und/oder unteren Bereich an möglichst vielen seiner Seiten auf.

Die Verkabelung mehrerer Konferenztische 22 mit einem zentralen Steuertisch 10 kann bei dem oben beschriebenen Konferenztischsystem problemlos von einem Laien durchgeführt werden. Außerdem erlaubt dieses Konferenztischsystem eine sehr flexible Anordnung der einzelnen Konferenztische 12.

Um den Anschluss der Verbindungsvorrichtungen 24 an die zweiten Anschlussmodule 22 zu vereinfachen, werden die Kabelstränge 24 zum Beispiel in einer Kabelwanne im hinteren Bereich unterhalb der Tischplatte des Konferenztisches 12 geführt, die zweiten Anschlussmodule 22 befinden sich im hinteren Bereich der Tischplatte, und die Tischplatte ist hinten hochklappbar. Bei hochgeklappter Tischplatte sind alle Anschlüsse leicht zugänglich und liegen insbesondere in einem oberen Bereich, der das Verkabeln weiter vereinfacht.

Um ein modernes und formschönes Design der Konferenztische 12 zu ermöglichen, sind die zweiten Anschlussmodule 22 vorzugsweise in die Tischplatten der weiteren Tische 12 integriert. Außerdem erfolgt der Anschluss der Verbindungsvorrichtungen 24 vorzugsweise unterhalb der Tischplatte, wobei die Verbindungsvorrichtungen 24 zum Beispiel in einer Kabelwanne unterhalb der Tischplatte geführt sein können.

In einer bevorzugten Ausführungsform sind die in die Konferenztische 12 integrierten zweiten Anschlussmodule 22 zwischen einer Nichtgebrauchsstellung, in welcher sie ihre zweiten Anschlüsse verdecken und bündig mit der Tischplatte der weiteren Tische 12 abschließen, und einer Gebrauchsstellung, in welcher sie ihre zweiten Anschlüsse einem Benutzer zugänglich machen, verstellbar (z.B. verschwenkbar).

In einer vorteilhaften Ausgestaltung des Konferenztischsystems können die Verbindungsvorrichtungen 24 außerdem platzsparend und griffbereit gelagert werden, wenn die Tische 10, 12 nicht verkabelt sind. Hierzu weist der Steuertisch 10 in seinem Innern mehrere Aufbewahrungsfächer (nicht dargestellt) oder dergleichen für jeweils eine Verbindungsvorrichtung 24 auf. Alternativ oder zusätzlich sind auch die Konferenztische 12 jeweils mit wenigstens einem Aufbewahrungsfach (nicht dargestellt; z.B. als geräumige Kabelwanne unter der Tischplatte ausgebildet) für eine Verbindungsvorrichtung 24 versehen. Wenn die Verbindungsvorrichtungen 24 als flexible Kabelstränge ausgebildet sind, wie oben erwähnt, können sie problemlos in den Aufbewahrungsfächern des Steuertisches 10 und der weiteren Tische 12 verstaut werden.

Ferner können, wie rechts unten in der Figur angedeutet, die Konferenztische 12 auch mit zwei oder mehr zweiten Anschlussmodulen 22 versehen werden, sodass der Konferenztisch 12 von mehreren Benutzern gemeinsam benutzt werden kann.

Es besteht weiter die Möglichkeit, dass, obwohl in der Figur nicht dargestellt, auch der Steuertisch 10 wenigstens ein zweites Anschlussmodul 22 aufweist, das wenigstens einen zweiten Anschluss entsprechend den ersten Anschlüssen des wenigstens einen ersten Anschlussmoduls besitzt und über eine Verbindungsvorrichtung mit einem ersten Anschlussmodul 19 verbunden ist, sodass ein Benutzer des Steuertisches auf die an den Steuertisch angeschlossenen externen Vorrichtungen zugreifen kann. Auf diese Weise kann auch der zentrale Steuertisch als ein Konferenztisch durch einen Konferenzteilnehmer genutzt werden. Die Verbindungsvorrichtung kann in diesem Fall als eine feste Verbindung zwischen dem zweiten Anschlussmodul 22 in der Tischplatte und direkt der Verteilervorrichtung 18 ausgebildet sein.

## Patentansprüche

1. Konferenztischsystem, mit
einem Steuertisch (10), mit
einer Anschlussvorrichtung (14) mit wenigstens einem Anschluss zur Verbindung mit wenigstens einer externen Vorrichtung (16);
einer Verteilervorrichtung (18) mit wenigstens einem ersten Anschlussmodul (19), das für jeden Anschluss der Anschlussvorrichtung (14) einen ersten Anschluss aufweist; und
einer Steuervorrichtung (20) zum Steuern der Verbindungen der mehreren ersten Anschlüsse der Verteilervorrichtung (18) mit dem jeweiligen Anschluss der Anschlussvorrichtung (14);
wenigstens einem weiteren Tisch (12), der wenigstens ein zweites Anschlussmodul (22) mit wenigstens einem zweiten Anschluss entsprechend den ersten Anschlüssen des wenigstens einen ersten Anschlussmoduls (19) des Steuertisches (10) aufweist, sodass ein Benutzer des weiteren Tisches (12) auf die an den Steuertisch (10) angeschlossenen externen Vorrichtungen (16) zugreifen kann; und
wenigstens einer Verbindungsvorrichtung (24) zum Verbinden eines zweiten Anschlussmoduls (22) eines weiteren Tisches (12) mit einem ersten Anschlussmodul (19) des Steuertisches (10) derart, dass die zweiten Anschlüsse des zweiten Anschlussmoduls (22) mit den jeweiligen ersten Anschlüssen des ersten Anschlussmoduls (19) verbunden sind, wobei die wenigstens eine Verbindungsvorrichtung (24) mit dem ersten Anschlussmodul (19) und/oder dem zweiten Anschlussmodul (22) lösbar verbindbar ist.

2. Konferenztischsystem nach Anspruch 1,
**dadurch gekennzeichnet,**
**dass** die Anschlüsse der Anschlussvorrichtung (14), die ersten Anschlüsse der ersten Anschlussmodule (19) und die zweiten Anschlüsse der zweiten Anschlussmodule (22) ausgewählt sind aus Anschlüssen für Audiosignale, Anschlüssen für VGA- und Videosignale, Anschlüssen für Computernetzwerksignale und Anschlüssen für Telefonnetzsignale.

3. Konferenztischsystem nach Anspruch 1 oder 2,
**dadurch gekennzeichnet,**
**dass** das wenigstens eine erste Anschlussmodul (19) der Verteilervorrichtung (18) ferner einen ersten Anschluss zur Stromversorgung aufweist; und
**dass** das wenigstens eine zweite Anschlussmodul (22) des wenigstens einen weiteren Tisches (12) ferner wenigstens einen zweiten Anschluss zur Stromversorgung aufweist, der über eine Verbindungsvorrichtung (24) mit dem ersten Stromversorgungsanschluss des ersten Anschlussmoduls (19) verbindbar ist.

4. Konferenztischsystem nach einem der Ansprüche 1 bis 3,
**dadurch gekennzeichnet,**
**dass** die wenigstens eine Verbindungsvorrichtung (24) ein flexibler Kabelstrang ist.

5. Konferenztischsystem nach einem der Ansprüche 1 bis 4,
**dadurch gekennzeichnet,**
**dass** der Steuertisch (10) ferner wenigstens ein Aufbewahrungsfach für eine Verbindungsvorrichtung (24) aufweist.

6. Konferenztischsystem nach einem der Ansprüche 1 bis 5,
**dadurch gekennzeichnet,**
**dass** der wenigstens eine weitere Tisch (12) ferner wenigstens ein Aufbewahrungsfach für eine Verbindungsvorrichtung (24) aufweist.

7. Konferenztischsystem nach einem der Ansprüche 1 bis 6,
**dadurch gekennzeichnet,**
**dass** der Steuertisch (10) ferner wenigstens ein zweites Anschlussmodul (22) aufweist, das wenigstens einen zweiten Anschluss entsprechend den ersten Anschlüssen des wenigstens einen ersten Anschlussmoduls (19) besitzt und über eine Verbindungsvorrichtung (24) mit einem ersten Anschlussmodul (19) verbunden ist, sodass ein Benutzer des Steuertisches (10) auf die an den Steuertisch (10) angeschlossenen externen Vorrichtungen (16) zugreifen kann.

8. Konferenztischsystem nach einem der Ansprüche 1 bis 7,
**dadurch gekennzeichnet,**
**dass** die ersten Anschlussmodule (19) der Verteilervorrichtung (18) wenigstens einen ersten Anschluss aufweisen, der über die Verteilervorrichtung (18) mit jeweils wenigstens einem ersten Anschluss der anderen ersten Anschlussmodule (19) verknüpft ist, sodass die Benutzer der weiteren Tische (12) über die zweiten Anschlussmodule (22) miteinander kommunizieren können.

9. Konferenztischsystem nach einem der Ansprüche 1 bis 8,
**dadurch gekennzeichnet,**
**dass** das wenigstens eine zweite Anschlussmodul (22) in die Tischplatte eines weiteren Tisches (12) integriert ist.

10. Konferenztischsystem nach Anspruch 9,
**dadurch gekennzeichnet,**
**dass** das wenigstens eine zweite Anschlussmodul (22) zwischen einer Nichtgebrauchsstellung, in welcher es die zweiten Anschlüsse verdecken und bündig mit der Tischplatte des weiteren Tisches (12) abschließt, und einer Gebrauchsstellung, in welcher es die zweiten Anschlüsse einem Benutzer zugänglich macht, verstellbar ist.

11. Konferenztischsystem nach einem der Ansprüche 1 bis 10,
**dadurch gekennzeichnet,**
**dass** die ersten Anschlussmodule (19) der Verteilervorrichtung (18) innerhalb des Steuertisches (10) angeordnet sind und die Verbindungsvorrichtungen (24) in einer beliebigen Richtung bzw. an einer beliebigen Stelle aus dem Steuertisch (10) herausführbar sind.
